# EUROPÄISCHE PATENTSCHRIFT

(11) **EP 1 540 649 B1**
(45) Veröffentlichungstag und Bekanntmachung des Hinweises auf die Patenterteilung: **12.09.2007**
(21) Anmeldenummer: 03798045.5
(22) Anmeldetag: 29.07.2003
(51) Int. Cl.: G11B 7/12, G02B 6/42

(54) **OPTISCHER ABTASTKOPF UND VERFAHREN ZUR HERSTELLUNG DESSELBEN**
OPTICAL SCANNING HEAD AND METHOD FOR PRODUCING THE SAME
TETE DE BALAYAGE OPTIQUE ET SON PROCEDE DE PRODUCTION

(30) Priorität: 20.09.2002 DE 10243756; 19.11.2002 DE 10253907
(43) Veröffentlichungstag der Anmeldung: 15.06.2005
(73) Patentinhaber: Osram Opto Semiconductors GmbH, 93049 Regensburg (DE)
(72) Erfinder: DACHS, Jürgen, 85084 Reichertshofen (DE); GRAMANN, Wolfgang, 93053 Regensburg (DE); KÄMPF, Mathias, 93133 Burglengenfeld (DE); SINGER, Frank, 93128 Regenstauf (DE); STEEGMÜLLER, Ulrich, 93055 Regensburg (DE)
(74) Vertreter: Epping - Hermann - Fischer
(86) Internationale Anmeldenummer: PCT/DE2003/002542
(87) Internationale Veröffentlichungsnummer: WO 2004/029948

(56) Entgegenhaltungen:
- EP-A- 0 555 097
- US-A- 5 689 108
- US-A- 6 104 690
- US-B1- 6 385 157

## Beschreibung

Die Erfindung betrifft einen optischen Abtastkopf, insbesondere zum Auslesen eines optischen Datenspeichers und ein Verfahren zum Herstellen eines derartigen Abtastkopfes.

Optische Vorrichtungen zum Auslesen von Daten sind beispielsweise aus den Druckschriften US 6,104,690, US 6,385, 157 B1 und EP 0 555 097 A1 bekannt.

Ein herkömmlicher optischer Abtastkopf, wie er beispielsweise bei einem CD-Spieler oder einem DVD-Spieler verwendet wird, besteht in der Regel aus diskreten aktiven und passiven Komponenten, die einzeln gefertigt und hybrid in ein Metallgehäuse eingebaut werden. Ein solcher Abtastkopf umfaßt typischerweise eine Laserquelle, optische Komponenten wie Linsen und Strahlteiler, eine Verzögerungsplatte sowie Detektoren für Monitor- und Signalfunktionen. Der Signaldetektor erfaßt dabei zur Messung von Spur, Abstand und Signalpegel das Licht, das von der Laserdiode emittiert und der CD- oder DVD-Scheibe reflektiert wird. Der Monitordetektor dient der Kontrolle der emittierten Laserleistung.

Der Monitordetektor ist in der Regel in der Nähe der Laserquelle angeordnet. Beispielsweise kann vorgesehen sein, daß ein Teil des Laserstrahls direkt hinter einer gehäusten Laserdiode auf eine Monitor-Photodiode trifft. Der Signaldetektor ist typischerweise als einzelnes Bauteil am Metallgehäuse des Abtastkopfes befestigt.

Eine solcher Abtastkopf hat eine Größe von etwa 30 mm x 40 mm und ist durch den diskreten Aufbau relativ groß und schwer. Der Monitordetektor und der Signaldetektor befinden sich in getrennten Gehäusen und müssen einzeln justiert werden.

US-A-6 104690 zeigt einen optischen Abstastkopf und ein Herstellungs verfahren gemäß dem Oberbegriff der Ansprüche 1 und 16.

Hier setzt die Erfindung an. Der Erfindung, wie sie in den Ansprüchen gekennzeichnet ist, liegt die Aufgabe zugrunde, einen optischen Abtastkopf zu schaffen, der ein geringes Gewicht und einen geringen Platzbedarf hat und dessen Komponenten einfach aufeinander abgestimmt werden können. Es soll auch ein Herstellungsverfahren für einen derartigen optischen Abtastkopf angegeben werden, das eine kostengünstige Herstellung und Montage ermöglicht.

Diese Aufgabe wird durch den optischen Abtastkopf nach Anspruch 1 und das Herstellungsverfahren nach Anspruch 16 gelöst. Weitere Ausgestaltungen der Erfindung ergeben sich aus den Unteransprüchen 2 bis 15 und 17 bis 20.

Erfindungsgemäß weist ein optischer Abtastkopf der eingangs genannten Art ein Substrat mit einer Hauptfläche auf, ein auf der Hauptfläche des Substrats angeordnetes kantenemittierendes Laserbauelement, dessen Abstrahlachse im wesentlichen parallel zu der ersten Hauptebene gerichtet ist, eine auf der Hauptfläche des Substrats angeordneten Umlenkeinrichtung zum Umlenken der Laserstrahlung in eine im wesentlichen senkrecht zur Hauptfläche stehende Richtung, zumindest einen Signaldetektor zum Erfassen der von dem optischen Datenspeicher reflektierten Laserstrahlung, und ein optisches Element, das die umgelenkte Laserstrahlung zu dem optischen Datenspeicher und reflektierte Laserstrahlung zu dem zumindest einen Signaldetektor führt, wobei das optische Element über zumindest ein Stützelement mit dem Substrat verbunden ist, und wobei das optische Element dadurch gekennzeichnet ist, dass das zumindest eine Stützelement und/oder die Umlenkeinrichtung aus Glas gefertigt sind, und das zumindest eine Stützelement und/oder die Umlenkeinrichtung durch anodisches Bonden unlösbar mit dem Substrat verbunden sind.

Durch die Integration mehrerer Funktionen auf einem einzigen Substrat (Submount) kann eine sehr geringe Größe und damit verbunden ein niedriges Gewicht des Abtastkopfes erreicht werden. Dies ermöglicht die Verwendung des erfindungsgemäßen Abtastkopfes insbesondere für mobile Anwendungen, wie Kameras, Musikabspielgeräte, Spielekonsolen, elektronische Bücher (eBooks), PDAs, Laptops oder Computerperipheriegeräte. Darüber hinaus ermöglicht die Integration den Einsatz kostengünstiger Herstellungs- und Montageverfahren, so daß der erfindungsgemäße Abtastkopf preiswerter als herkömmliche Pickupsysteme hergestellt werden kann. Bedingt durch das geringe Gewicht des Abtastkopfes können schnellere Zugriffszeiten als bei herkömmlichen Pickupsystemen erreicht werden.

In einer bevorzugten Ausgestaltung des erfindungsgemäßen optischen Abtastkopfes ist vorgesehen, daß die Umlenkeinrichtung zugleich als ein Stützelement ausgebildet ist, über das das optische Element mit dem Substrat verbunden ist.

Mit Vorteil ist ein Abstrahlrichtungs-Signaldetektor auf der Hauptfläche des Substrats auf der Abstrahlachse des Laserbauelements und in Abstrahlrichtung hinter der Umlenkeinrichtung angeordnet. Damit sind das Laserbauelement, die Umlenkeinrichtung und der Abstrahlrichtungs-Signaldetektor in dieser Reihenfolge hintereinander auf einer Geraden angeordnet.

Es ist ebenfalls bevorzugt, wenn alternativ oder zusätzlich zu dem Abstrahlrichtungs-Signaldetektor ein Gegenrichtungs-Signaldetektor auf der Hauptfläche des Substrats auf der Abstrahlachse des Laserbauelements und entgegengesetzt zur Abstrahlrichtung des Laserbauelements angeordnet ist.

Zwischen dem Laserbauelement und dem Gegenrichtungs-Signaldetektor ist mit Vorteil ein Stützelement angeordnet, über welches das optische Element mit dem Substrat verbunden ist.

In diesem Zusammenhang ist es bevorzugt, wenn das zwischen dem Laserbauelement und dem Gegenrichtungs-Signaldetektor angeordnete Stützelement auf seiner dem Laserbauelement zugewandten Fläche mit einer metallischen oder dielektrischen Spiegelschicht versehen ist. Dadurch kann der Einkopplung von Streulicht des Laserbauelements in den Gegenrichtungs-Signaldetektor wirkungsvoll begegnet werden.

Alternativ kann das zwischen dem Laserbauelement und dem Gegenrichtungs-Signaldetektor angeordnete Stützelement auf seiner dem Laserbauelement zugewandten Fläche mit einer Absorptionsschicht versehen sein. Auch dadurch wird die Streulichteinkopplung wirkungsvoll unterdrückt.

Eine noch weitergehende Verringerung des eingekoppelten Streulichts läßt sich dadurch erreichen, daß das zwischen dem Laserbauelement und dem Gegenrichtungs-Signaldetektor angeordnete Stützelement als Umlenkeinrichtung ausgebildet ist, die Streulicht des Laserbauelements von dem Gegenrichtungs-Signaldetektor weg umlenkt. Mit Vorteil lenkt das Stützelement dabei das Streulicht in eine Richtung im wesentlichen senkrecht zur Hauptfläche um.

Die Integration eines erfindungsgemäßen optischen Abtastkopfes kann weiter dadurch erhöht werden, daß der zumindest eine Signaldetektor in dem Substrat ausgebildet ist. Bevorzugt ist umfaßt der zumindest eine Signaldetektor ein Array von in dem Substrat ausgebildeten PIN-Photodioden.

In einer bevorzugten Weiterbildung des optischen Abtastkopfes ist ein Monitordetektor zur Kontrolle der abgestrahlten Leistung des Laserbauelements ebenfalls auf dem Substrat integriert.

In einer weiteren Ausführungsform sind die Stützelemente seitlich des Umlenkspiegels angeordnet sowie die Detektoren zwischen dem Spiegel und den Stützelementen eingebaut. Das optische Element ist auf den Stützelementen befestigt.

Das Substrat ist mit Vorteil durch ein Siliziumsubstrat gebildet. Für die Herstellungs- und Montageverfahren können dann kostengünstige Prozesse der Halbleiterindustrie genutzt werden.

Die Hauptfläche des Substrats weist bevorzugt eine Fläche von 10 mm² oder weniger auf.

Bei einem erfindungsgemäßen Verfahren zum Herstellen eines oben beschriebenen optischen Abtastkopfs wird bei der Herstellung der Umlenkeinrichtung
- ein Glaswafer in einzelne Streifen gesägt,
- werden an die Streifen in einem vorbestimmten Winkel, insbesondere einem Winkel von etwa 45° Flächen angeschliffen,
- werden die angeschliffenen Flächen mit einer hochreflektierenden Spiegelschicht beschichtet, um ein Umlenkprisma für die Laserstrahlumlenkung zu erhalten, und
- werden die Umlenkprismen ausgerichtet und unlösbar mit dem Substrat verbunden, wobei das Verfahren dadurch gekennzeichnet ist, dass die Umlenkprismen durch anodisches Bonden mit dem Substrat verbunden werden.

Vor dem Sägen des Glaswafers werden zweckmäßig Bereiche auf der Vorderseite des Glaswafers metallisiert, um Lötflächen zur Anbindung optischer Komponenten nach der Verbindung der Umlenkprismen mit dem Substrat zu schaffen. Ebenfalls werden bevorzugt vor dem Sägen des Glaswafers durch Sandstrahlen Gräben in die Rückseite des Glaswafers eingebracht.

In einer besonders vorteilhaften Ausgestaltung des erfindungsgemäßen Verfahrens werden die Stützelemente zugleich mit der Umlenkeinrichtung aus dem Glaswafer hergestellt.

Bevorzugt werden als Signaldetektor(en) ein Array von PIN-Photodioden in dem Substrat ausgebildet.

Weitere vorteilhafte Ausgestaltungen, Merkmale und Details der Erfindung ergeben sich aus den abhängigen Ansprüchen, der Beschreibung der Ausführungsbeispiele und den Zeichnungen.

Die Erfindung soll nachfolgend anhand von Ausführungsbeispielen im Zusammenhang mit den Zeichnungen näher erläutert werden. Es sind jeweils nur die für das Verständnis der Erfindung wesentlichen Elemente dargestellt. Es zeigt
- Fig. 1: eine Aufsicht auf einen Silizium-Submount nach einem Ausführungsbeispiel der Erfindung vor der Montage der Glasprismen in schematischer Darstellung;
- Fig. 2: einen Schnitt durch den Silizium-Submount der Fig. 1 nach der Montage der Glasprismen mit Laser und Optik;
- Fig. 3: in (a) bis (c) drei Varianten zur Unterdrückung von Laserstreulicht in schematischer Darstellung;
- Fig. 4: eine Aufsicht auf einen Silizium-Submount wie in Fig. 1 nach einem anderen Ausführungsbeispiel der Erfindung;
- Fig. 5: einen Schnitt wie in Fig. 2 durch den Silizium-Submount der Fig. 4;
- Fig. 6: eine Aufsicht auf einen Silizium-Submount wie in Fig. 1 nach einem weiteren Ausführungsbeispiel der Erfindung;
- Fig. 7: einen Schnitt durch den Silizium-Submount der Fig. 6 nach der Montage der Glasprismen;
- Fig. 8: einen Schnitt durch einen Silizium-Submount wie in Fig. 7 nach noch einem weiteren Ausführungsbeispiel der Erfindung;
- Fig. 9: eine Aufsicht auf einen Silizium-Submount wie in Fig. 1 nach noch einem weiteren Ausführungsbeispiel der Erfindung;
- Fig. 10: einen Schnitt durch den Silizium-Submount der Fig. 9 nach der Montage der Glasprismen;
- Fig. 11: eine Aufsicht auf einen Silizium-Submount und einen Schnitt durch denselben nach noch einem weiteren Ausführungsbeispiel der Erfindung;
- Fig. 12: in (a) bis (d) vier Varianten für die Ausführung der Signaldioden in jedem der erfindungsgemäßen Silizium-Submounts; und
- Fig. 13: in (a) bis (e) Zwischenschritte eines erfindungsgemäßen Verfahrens zur Herstellung der Glasprismen und der Montage der Glasprismen auf einem Silizium-Submount.

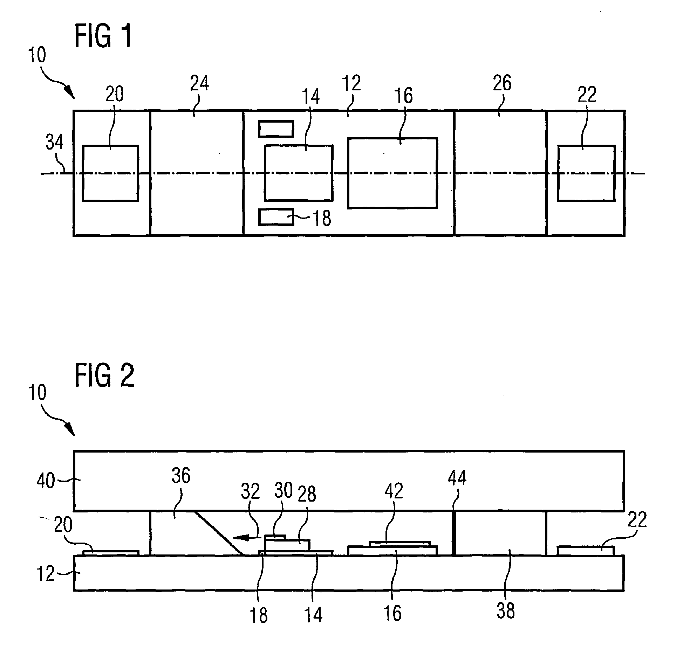

Ein erstes Ausführungsbeispiel der Erfindung wird nunmehr in Zusammenhang mit den Figuren 1 und 2 erläutert. Figur 1 zeigt dabei eine Aufsicht auf einen allgemein mit 10 bezeichneten Silizium-Submount vor der Montage der Glasprismen, Fig. 2 den Submount 10 nach der Montage mit Laser und Optik.

Der Silizium-Submount 10 enthält ein etwa 1,3 mm x 4,8 mm großes Siliziumsubstrat 12, das Chipbondflächen 14 und 16, zwei Monitorphotodioden 18 sowie zwei Signaldioden 20 und 22 aufweist. Auf der Chipbondfläche 14 ist eine Wärmesenke 28 und auf der Wärmesenke 28 eine kantenemittierende Laserdiode 30 angebracht, die im Betrieb rote Laserstrahlung 32 entlang der Abstrahlachse 34 emittiert. Die Chipbondfläche 16 trägt einen integrierten Schaltkreis 42, etwa einen Verstärker- oder Lasertreiberschaltkreis.

Auf den Glasbondflächen 24 und 26 sind durch anodisches Bonden zwei Glasprismen 36 und 38 unlösbar mit dem Substrat 12 verbunden. Die Glasprismen dienen zum einen als Stützelemente, auf denen eine optische Komponente 40 beispielsweise durch Löten befestigt wird. Das Glasprisma 36 dient weiter als Umlenkprisma, das die parallel zur Oberfläche des Substrats 12 entlang der Abstrahlachse 34 emittierte Laserstrahlung 32 um 90° umlenkt.

Die optische Komponente 40 führt die umgelenkte Laserstrahlung zu einem selbst nicht dargestellten optischen Speichermedium und führt die dort reflektierte Laserstrahlung zu den Signaldioden 20 und 22 zurück. Die entsprechend einem Strich- oder Punktmuster auf dem Speichermedium modulierten Signale werden nach ihrer Erfassung durch die Signaldioden 20 und 22 in an sich bekannter Weise zur Datenübertragung, sowie zur Spurerkennung und Spurführung benutzt.

Das Glasprisma 38 ist auf seiner der Laserdiode 30 zugewandten Fläche mit einer Aluminium-Schicht 44 verspiegelt, um zu verhindern, daß Streustrahlung von der Laserdiode 30 zur Signaldiode 22 gelangt. Anstatt mit einer Aluminiumschicht kann das Glasprisma auch mit einer anderen metallischen Schicht, etwa einer AlSi-Schicht, oder mit einem dielektrischen Spiegel, beispielsweise aus Aluminiumoxid/Si versehen sein.

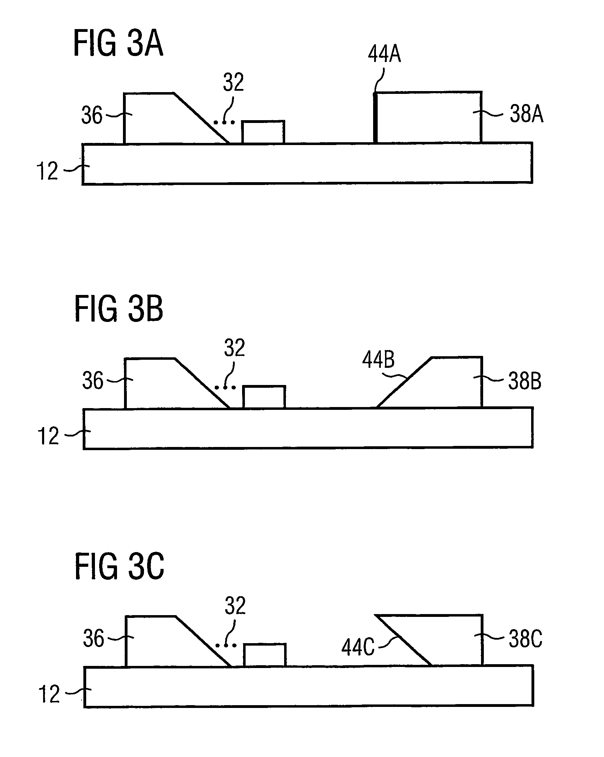

Figur 3 zeigt in (a) bis (c) drei weiterer Varianten zur Unterdrückung von Laserstreulicht in vereinfachter Darstellung. Bei der Variante der Fig. 3(a) ist das Glasprisma 38A statt mit einem Spiegel 44 mit einer absorbierenden Schicht 44A versehen. In der Gestaltung der Fig. 3(b) ist das Glasprisma 38B als 45°-Spiegel ausgeführt, dessen Spiegelfläche 44B Laserstreulicht nach oben wegreflektiert. Die Fläche 44B kann dabei als Standard-Spiegel mit einer metallischen oder dielektrischen Beschichtung ausgebildet sein, oder mit einer absorbierenden Beschichtung versehen sein. Fig. 3(c) zeigt eine Abwandlung der Gestaltung von Fig. 3(b), bei der die 45°-Spiegelfläche 44C des Glasprimas 38C nach unten gerichtet ist, also Laserstreulicht ins Substrat hinein ablenkt, wo es absorbiert wird. Auch hier kann die Fläche 44C sowohl verspiegelt als auch mit einer absorbierenden Schicht versehen sein.

Wieder mit Bezug auf die Figuren 1 und 2 dient das Siliziumsubstrat 12 somit neben seiner Funktion als Träger der darauf angeordneten Glasprismen 36, 38, der Laserdiode 30 und des ICs 42 auch als Wärmesenke und als Substrat für ein PIN-Photodiodenarray, welches die Monitorphotodioden 18 und die Signaldioden 20 und 22 umfaßt. Die Monitorphotodioden 18 sind in der Nähe der Laserdiode 30 angeordnet und messen den Rückreflex einer der optischen Komponenten zur Regelung der Laserleistung.

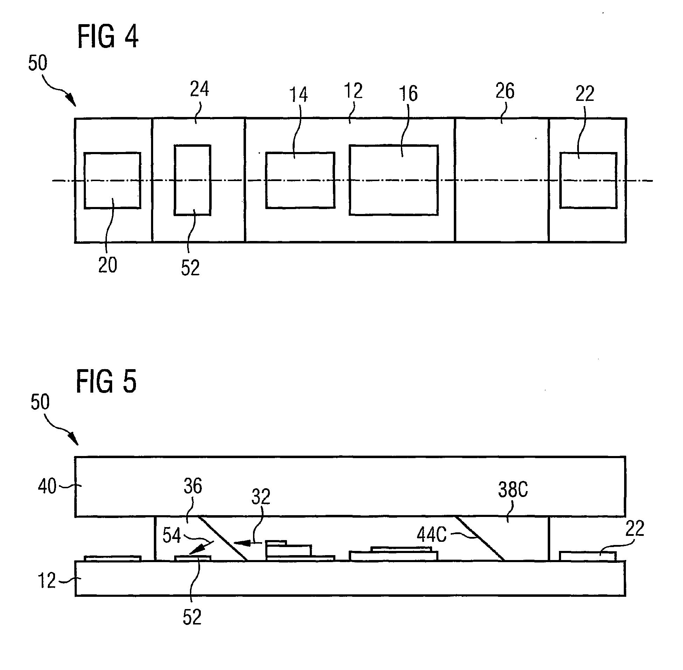

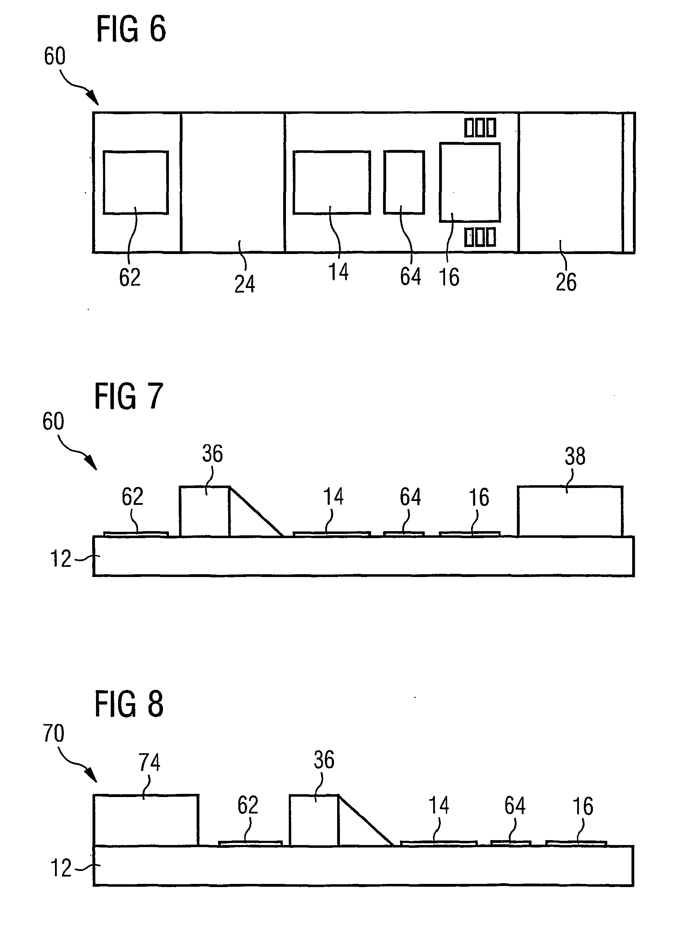

Eine andere Ausführungsform eines erfindungsgemäßen Silizium-Submounts 50 ist in den Figuren 4 und 5 dargestellt. Dabei bezeichnen gleiche Bezugszeichen die gleichen Elemente wie in den Figuren 1 und 2. Der Silizium-Submount 50 unterscheidet sich von dem Silizium-Submount 10 insbesondere durch die Anordnung der Monitorphotodiode 52. Die Monitorphotodiode 52 ist bei diesem Ausführungsbeispiel unter dem Umlenkprisma 36 angeordnet. Sie nimmt als Monitorsignal denjenigen Teil 54 der Laserstrahlung 32 auf, der durch die verspiegelte Fläche des Umlenkprismas durchgelassen und zur Monitordiode 52 hin gebrochen wird.

Darüber hinaus verwirklicht das Ausführungsbeispiel der Fig. 5 als Mittel zur Reduktion des Streulichts die in Fig. 3(c) gezeigte Variante, bei der das Stützelement 38C als Umlenkelement mit unter 45° zum Substrat 12 hin geneigter Spiegelfläche 44C ausgebildet ist.

Figuren 6 und 7 zeigen ein weiteres Ausführungsbeispiel eines Silizium-Submounts 60 nach der Erfindung. Auch hier bezeichnen gleiche Bezugszeichen die gleichen Elemente wie bei dem Silizium-Submount 10 der Figuren 1 und 2. Bei dem Silizium-Submount 60 übernimmt anstelle des Paares von Signaldetektoren 20 und 22 der Fig. 1 ein einziger Signaldetektor 62 alle Funktionen für Tracking, Messung des Signalpegels und Fokussierung. Die Monitordiode 64 ist dabei in der der Abstrahlrichtung des Lasers entgegengesetzten Richtung, unmittelbar hinter der ersten Chipbondfläche 14 angeordnet.

Figur 8 zeigt eine Abwandlung der Gestaltung von Fig. 7, bei der das zweite Stützelement 74 in Abstrahlrichtung hinter dem einzigen Signaldetektor 62 auf das Substrat 12 gebondet ist. Die Anordnung der restlichen Elemente entspricht derjenigen der Fig. 7.

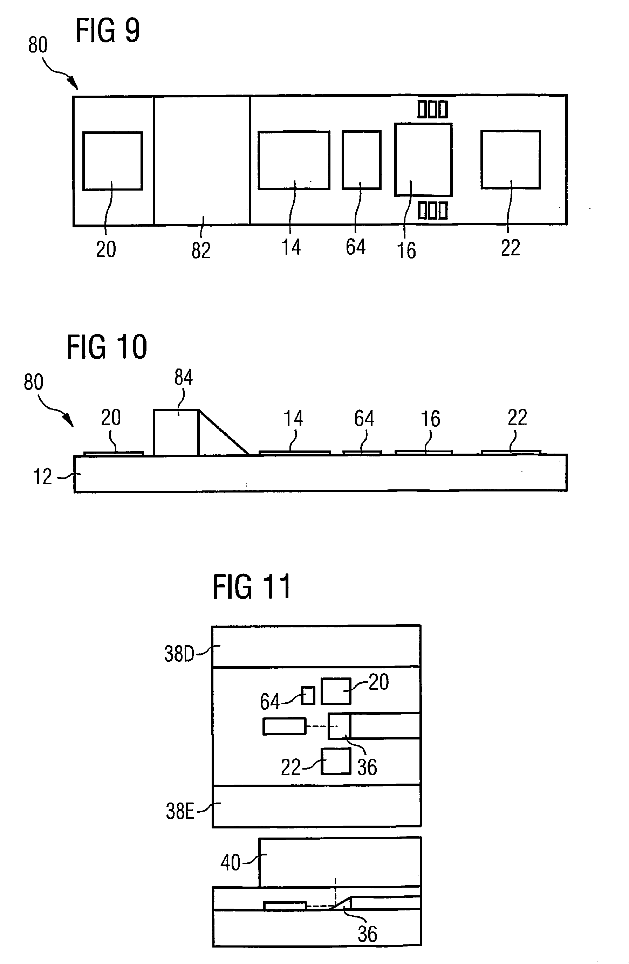

Ein weiteres Ausführungsbeispiel der Erfindung ist in Figuren 9 und 10 dargestellt. Bei dem Silizium-Submounts 80 ist neben der Glasbondfläche 82, die zur Aufnahme des Umlenkprismas 84 dient, auf einen weiteren Glasstützpunkt verzichtet. Das Umlenkprisma 84 stellt somit das einzige Stützelement für die optische Komponente 40 dar. Die Anordnung und Gestaltung der Signaldioden 20, 22 entspricht in dem gezeigten Ausführungsbeispiel der der Fig. 1, die Anordnung und Gestaltung der Monitordiode 64 der der Fig. 6.

Ein weiteres Ausführungsbeispiel der Erfindung ist in Figur 11 dargestellt. Die Stützelemente 38D, 38E sind seitlich des Umlenkspiegels 36 angeordnet und die Detektoren 20,22 zwischen dem Spiegel 36 und den Stützelementen 38D, 38E eingebaut. Das optische Element 40 ist auf den Stützelementen befestigt.

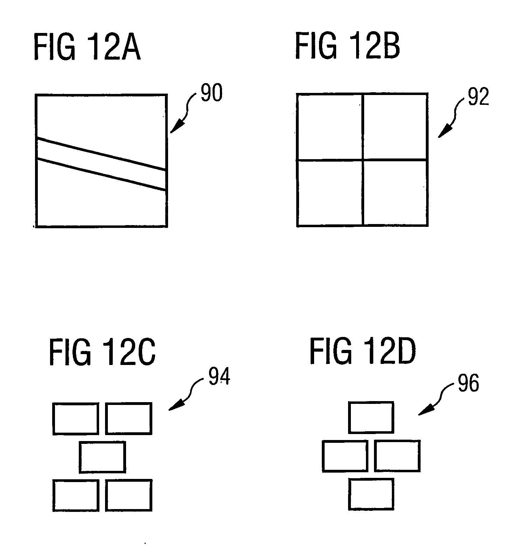

Figur 12 zeigt in (a) bis (d) vier Varianten für die Ausführung eines Signaldetektorarrays 90, 92 ,94 oder 96. Jedes dieser Arrays erlaubt eine gute Messung von Spur, Abstand und Signalpegel des reflektierten Laserlichts und kann für einen der Signaldetektoren 20, 22 bzw. 62 der oben besprochenen Silizium-Submounts eingesetzt werden.

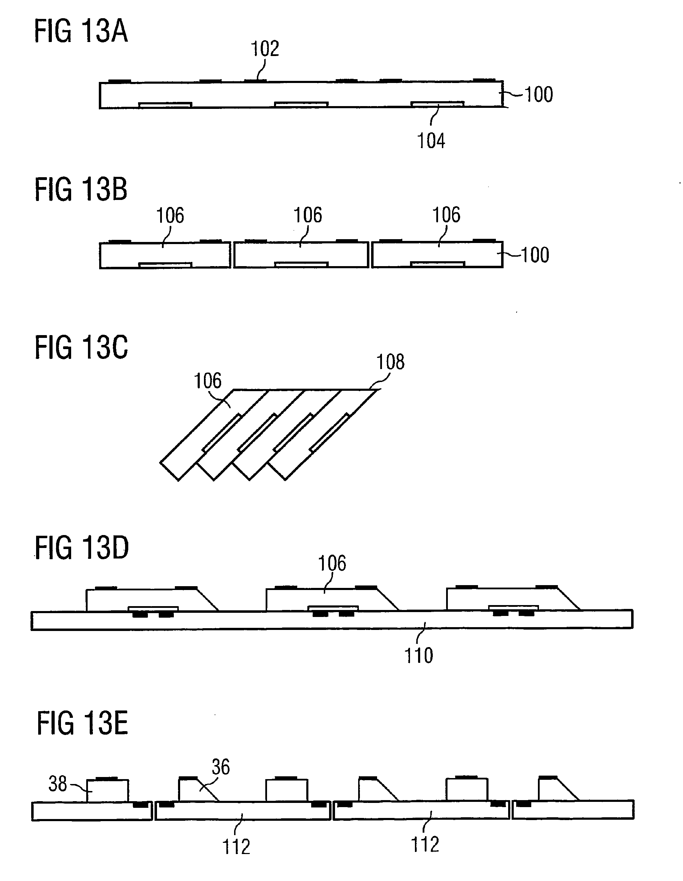

Die Herstellung der Glasprismen und die Montage der Glasprismen auf dem Silizium-Submount wird nun anhand der Fig. 13 erläutert. Dabei erfolgt die Herstellung der Submounts im Waferverbund, beispielsweise auf 150 mm oder 200 mm Scheiben, wobei auf einem 150 mm Wafer beispielsweise 1500 Submounts angeordnet werden können.

In einem ersten Arbeitsschritt, Fig. 13(a), werden dazu auf einem Glaswafer 100 Bereiche 102 metallisiert, die später als Lötflächen zur Anbindung der optischen Komponente 40 dienen. Dann werden auf der Rückseite des Glaswafers 100 durch Sandstrahlen etwa 20 µm tiefe Gräben 104 eingebracht. Anschließend wird der Glaswafer 100 zersägt, so daß eine Mehrzahl einzelner Streifen 106 entsteht, Fig. 13(b).

Dann werden, wie in der Fig. 13(c) gezeigt, an mehreren der Steifen 106 gemeinsam 45° Flächen 108 angeschliffen. Diese Flächen 108 werden im nächsten Arbeitsgang poliert und mit einem hochreflektierenden Spiegel für die Laserstrahlumlenkung beschichtet. Anschließend werden die Prismen auf einem Siliziumwafer 110 orientiert und anodisch gebondet, Fig. 13(d) .

Durch verschiedene weitere Sägeschritte wird das Glasmittelteil jeweils herausgetrennt, so daß aus jedem Glasstreifen 106 ein Umlenkprisma 36 und ein weiteres Stützelement 38 entsteht. Auch werden die einzelnen Submounts 112 voneinander getrennt, Fig. 13(e). Dabei werden die Submounts 112 zunächst noch auf einer Folie gehalten und dann durch pick&place in an sich bekannter Weise in Abtastkopfgehäuse gesetzt.

Die Erläuterung der Erfindung anhand der Ausführungsbeispiele ist selbstverständlich nicht als Einschränkung auf diese zu verstehen.

## Patentansprüche

1. Optischer Abtastkopf zum Auslesen eines optischen Datenspeichers mit
- einem Substrat (12) mit einer Hauptfläche,
- einem auf der Hauptfläche des Substrats (12) angeordneten kantenemittierenden Laserbauelement (30), dessen Abstrahlachse (34) im wesentlichen parallel zu der ersten Hauptebene gerichtet ist,
- einer auf der Hauptfläche des Substrats angeordneten Umlenkeinrichtung (36) zum Umlenken der Laserstrahlung (32) in eine im wesentlichen senkrecht zur Hauptfläche stehende Richtung,
- zumindest einem Signaldetektor (20, 22; 62) zum Erfassen der von dem optischen Datenspeicher reflektierten Laserstrahlung, und
- einem optischen Element (40), das die umgelenkte Laserstrahlung zu dem optischen Datenspeicher und reflektierte Laserstrahlung zu dem zumindest einen Signaldetektor (20, 22) führt,
wobei das optische Element (40) über zumindest ein Stützelement (36, 38) mit dem Substrat (12) verbunden ist,
**dadurch gekennzeichnet, daß**
das zumindest eine Stützelement (36, 38) und/oder die Umlenkeinrichtung (36) aus Glas gefertigt sind,
und das zumindest eine Stützelement (36, 38) und/oder die Umlenkeinrichtung (36) durch anodisches Bonden unlösbar mit dem Substrat verbunden sind.

2. Optischer Abtastkopf nach Anspruch 1,
**dadurch gekennzeichnet, daß**
die Umlenkeinrichtung (36) zugleich als ein Stützelement ausgebildet ist, über das das optische Element (40) mit dem Substrat (12) verbunden ist.

3. Optischer Abtastkopf nach Anspruch 1 oder 2,
**dadurch gekennzeichnet , daß**
ein Abstrahlrichtungs-Signaldetektor (20; 62) auf der Hauptfläche des Substrats (12) auf der Abstrahlachse (34) des Laserbauelements (30) und in Abstrahlrichtung (32) hinter der Umlenkeinrichtung (36) angeordnet ist.

4. Optischer Abtastkopf nach einem der vorhergehenden Ansprüche, **dadurch gekennzeichnet, daß** ein Gegenrichtungs-Signaldetektor (22) auf der Hauptfläche des Substrats (12) auf der Abstrahlachse (34) des Laserbauelements (30) und entgegengesetzt zur Abstrahlrichtung (32) angeordnet ist.

5. Optischer Abtastkopf nach Anspruch 4,
**dadurch gekennzeichnet, daß**
zwischen dem Laserbauelement (30) und dem Gegenrichtungs-Signaldetektor (22) ein Stützelement (38) angeordnet ist, über das das optische Element (40) mit dem Substrat (12) verbunden ist.

6. Optischer Abtastkopf nach Anspruch 5,
**dadurch gekennzeichnet , daß**
das zwischen dem Laserbauelement (30) und dem Gegenrichtungs-Signaldetektor (22) angeordnete Stützelement (38) auf seiner dem Laserbauelement zugewandten Fläche mit einer metallischen oder dielektrischen Spiegelschicht (44) versehen ist.

7. Optischer Abtastkopf nach Anspruch 5,
**dadurch gekennzeichnet, daß**
das zwischen dem Laserbauelement (30) und dem Gegenrichtungs-Signaldetektor (22) angeordnete Stützelement (38A) auf seiner dem Laserbauelement zugewandten Fläche mit einer Absorptionsschicht (44A) versehen ist.

8. Optischer Abtastkopf nach einem der Ansprüche 5 bis 7,
**dadurch gekennzeichnet, daß**
das zwischen dem Laserbauelement (30) und dem Gegenrichtungs-Signaldetektor (22) angeordnete Stützelement als Umlenkeinrichtung (38B, 38C) ausgebildet ist, die Streulicht des Laserbauelements (30) von dem Gegenrichtungs-Signaldetektor (22) weg umlenkt.

9. Optischer Abtastkopf nach Anspruch 8,
**dadurch gekennzeichnet, daß** das als Umlenkeinrichtung (38B, 38C) ausgebildete Stützelement Streulicht in eine Richtung im wesentlichen senkrecht zur Hauptfläche umlenkt.

10. Optischer Abtastkopf nach einem der vorhergehenden Ansprüche, **dadurch gekennzeichnet, daß** der zumindest eine Signaldetektor (20, 22; 62) in dem Substrat (12) ausgebildet ist.

11. Optischer Abtastkopf nach Anspruch 10,
**dadurch gekennzeichnet, daß**
der zumindest eine Signaldetektor (20, 22; 62) ein Array (90; 92; 94; 96) von in dem Substrat (12) ausgebildeten PIN-Photodioden umfaßt.

12. Optischer Abtastkopf nach einem der vorhergehenden Ansprüche, **dadurch gekennzeichnet, daß** ein Monitordetektor (18; 52; 64) zur Kontrolle der abgestrahlten Leistung des Laserbauelements (30) auf dem Substrat (12) integriert ist.

13. Optischer Abtastkopf nach einem der vorhergehenden Ansprüche, **dadurch gekennzeichnet, daß** die Stützelemente (38D, 38E) seitlich des Umlenkspiegels (36) angeordnet sind, die Detektoren (20,22) zwischen dem Spiegel (36) und den Stützelementen (38D, 38E) eingebaut sind und das optische Element (40) auf den Stützelementen (38D, 38E) befestigt ist.

14. Optischer Abtastkopf nach einem der vorhergehenden Ansprüche, **dadurch gekennzeichnet, daß** das Substrat (12) durch ein Siliziumsubstrat gebildet ist.

15. Optischer Abtastkopf nach einem der vorhergehenden Ansprüche, **dadurch gekennzeichnet, daß** die Hauptfläche des Substrats (12) eine Fläche von 10 mm² oder weniger aufweist.

16. Verfahren zum Herstellen eines optischen Abtastkopfs nach einem der Ansprüche 1 bis 15, bei dem zur Herstellung der Umlenkeinrichtung
- ein Glaswafer in einzelne Streifen gesägt wird,
- an die Streifen in einem vorbestimmten Winkel, insbesondere einem Winkel von etwa 45° Flächen angeschliffen werden,
- die angeschliffenen Flächen mit einer hochreflektierenden Spiegelschicht beschichtet werden, um ein Umlenkprisma für die Laserstrahlumlenkung zu erhalten, und
- die Umlenkprismen ausgerichtet und unlösbar mit dem Substrat verbunden werden,
**dadurch gekennzeichnet, daß**
die Umlenkprismen durch anodisches Bonden mit dem Substrat verbunden werden.

17. Verfahren nach Anspruch 16,
**dadurch gekennzeichnet, daß**
vor dem Sägen des Glaswafers Bereiche auf der Vorderseite des Glaswafers metallisiert werden, um Lötflächen zur Anbindung optischer Komponenten nach der Verbindung der Umlenkprismen mit dem Substrat zu schaffen.

18. Verfahren nach Anspruch 16 oder 17,
**dadurch gekennzeichnet, daß**
vor dem Sägen des Glaswafers durch Sandstrahlen Gräben in die Rückseite des Glaswafers eingebracht werden.

19. Verfahren nach einem der Ansprüche 16 bis 18,
**dadurch gekennzeichnet, daß**
die Stützelemente zugleich mit der Umlenkeinrichtung aus dem Glaswafer hergestellt werden.

20. Verfahren nach einem der Ansprüche 16 bis 19,
**dadurch gekennzeichnet, daß**
als Signaldetektor(en) ein Array von PIN-Photodioden in dem Substrat ausgebildet werden.

## Claims

1. Optical sensing head for reading out an optical data memory, having
- a substrate (12) with a main surface,
- an edge-emitting laser component (30) which is arranged on the main surface of the substrate (12) and whose irradiation axis (34) is oriented essentially parallel to the first main plane,
- a deflection device (36) which is arranged on the main surface of the substrate and has the purpose of deflecting the laser radiation (32) in a direction which is essentially perpendicular to the main surface,
- at least one signal detector (20, 22; 62) for detecting the laser radiation which is reflected by the optical data memory, and
- an optical element (40) which guides the deflected laser radiation to the optical data memory and guides reflected laser radiation to the at least one signal detector (20, 22),
the optical element (40) being connected to the substrate (12) via at least one supporting element (36, 38), **characterized in that** the at least one supporting element (36, 38) and/or the deflection device (36) are produced from glass and the at least one supporting element (36, 38) and/or the deflection device (36) are nondetachably connected to the substrate by anodic bonding.

2. Optical sensing head according to Claim 1, **characterized in that** the deflection device (36) is simultaneously embodied as a supporting element via which the optical element (40) is connected to the substrate (12).

3. Optical sensing head according to Claim 1 or 2, **characterized in that** an irradiation-direction signal detector (20; 62) is arranged on the main surface of the substrate (12) on the irradiation axis (34) of the laser component (30) and behind the deflection device (36) in the irradiation direction (32).

4. Optical sensing head according to one of the preceding claims, **characterized in that** an opposite-direction signal detector (22) is arranged on the main surface of the substrate (12) on the irradiation axis (34) of the laser component (30) and in the opposite direction to the irradiation direction (32).

5. Optical sensing head according to Claim 4, **characterized in that** a supporting element (38) via which the optical element (40) is connected to the substrate (12) is arranged between the laser component (30) and the opposite-direction signal detector (22).

6. Optical sensing head according to Claim 5, **characterized in that** the supporting element (38) which is arranged between the laser component (30) and the opposite-direction signal detector (22) is provided with a metallic or dielectric mirror layer (44) on its surface facing the laser component.

7. Optical sensing head according to Claim 5, **characterized in that** the supporting element (38A) which is arranged between the laser component (30) and the opposite-direction signal detector (22) is provided with an absorption layer (44A) on its surface facing the laser component.

8. Optical sensing head according to one of Claims 5 to 7, **characterized in that** the supporting element which is arranged between the laser component (30) and the opposite-direction signal detector (22) is embodied as a deflection device (38B, 38C) which deflects away stray light of the laser component (30) from the opposite-direction signal detector (22).

9. Optical sensing head according to Claim 8, **characterized in that** the supporting element which is embodied as a deflection device (38B, 38C) deflects stray light in a direction essentially perpendicular to the main surface.

10. Optical sensing head according to one of the preceding claims, **characterized in that** the at least one signal detector (20, 22; 62) is formed in the substrate (12).

11. Optical sensing head according to Claim 10, **characterized in that** the at least one signal detector (20, 22; 62) comprises an array (90; 92; 94; 96) of PIN photodiodes which are formed in the substrate (12).

12. Optical sensing head according to one of the preceding claims, **characterized in that** a monitor detector (18; 52; 64) for checking the irradiated power of the laser component (30) is integrated on the substrate (12).

13. Optical sensing head according to one of the preceding claims, **characterized in that** the supporting elements (38D, 38E) are arranged to the side of the deflection mirror (36), the detectors (20, 22) are installed between the mirror (36) and the supporting elements (38D, 38E), and the optical element (40) is mounted on the supporting elements (38D, 38E).

14. Optical sensing head according to one of the preceding claims, **characterized in that** the substrate (12) is formed by a silicon substrate.

15. Optical sensing head according to one of the preceding claims, **characterized in that** the main surface of the substrate (12) has an area of 10 mm² or less.

16. Method for fabricating an optical sensing head according to one of Claims 1 to 15, in which, in order to fabricate the deflection device,
- a glass wafer is sawn into individual strips,
- surfaces are ground onto the strips at a predetermined angle, in particular an angle of approximately 45°,
- the ground surfaces are coated with a highly reflective mirror layer in order to obtain a deflection prism for the deflection of laser beam, and
- the deflection prisms are orientated and connected nondetachably to the substrate, **characterized in that** the deflection prisms are connected to the substrate by anodic bonding.

17. Method according to Claim 16, **characterized in that**, before the glass wafer is sawn, regions on the front side of the glass wafer are metalized in order to provide soldering surfaces for connecting optical components after the connection of the deflection prisms to the substrate.

18. Method according to Claim 16 or 17, **characterized in that**, before the glass wafer is sawn, trenches are introduced into the rear side of the glass wafer by sandblasting.

19. Method according to one of Claims 16 to 18, **characterized in that** the supporting elements are fabricated from the glass wafer at the same time as the deflection device.

20. The method according to one of Claims 16 to 19, **characterized in that** an array of PIN photodiodes is formed in the substrate as signal detector/detectors.

## Revendications

1. Tête d'analyse optique pour extraire une mémoire d'informations optique, comprenant
- un substrat (12) ayant une surface principale,
- un composant (30) laser disposé sur la surface principale du substrat (12), émettant par le bord et dont l'axe (34) d'émission est pour l'essentiel parallèle au premier plan principal,
- un dispositif (36) de déviation disposé sur la surface principale du substrat pour dévier le rayonnement (32) laser dans une direction pour l'essentiel perpendiculaire à la surface principale,
- au moins un détecteur (20, 22 ; 62) de signal pour détecter le rayonnement laser réfléchi par la mémoire d'informations optique, et
- un élément (40) optique qui guide le rayonnement laser dévié vers la mémoire d'informations optique et le rayonnement laser réfléchi vers le au moins un détecteur (20, 22) de signal,
dans laquelle l'élément (40) optique est relié au substrat (12) par au moins un élément (36, 38) d'appui,
**caractérisée en ce que**
le au moins un élément (36, 38) d'appui et/ou le dispositif (36) de déviation sont fabrigués de verre et le au moins un élément (36, 38) d'appui et/ou le dispositif (36) de déviation sont reliés au substrat d'une manière fixe par des liaisons anodiques.

2. Tête d'analyse optique suivant la revendication 1,
**caractérisée en ce que**
le dispositif (36) de déviation est constitué en même temps en élément d'appui par lequel l'élément (40) optique est relié au substrat (12).

3. Tête d'analyse optique suivant la revendication 1 ou 2,
**caractérisée**
**en ce qu'**un détecteur (20 ; 62) de signal de sens d'émission est disposé sur la surface principale du substrat (12) sur l'axe (34) d'émission du composant (30) laser et dans la direction (32) d'émission derrière le dispositif (36) de déviation.

4. Tête d'analyse optique suivant l'une des revendications précédentes,
**caractérisée en ce**
**qu'**un détecteur (22) de signal de sens opposé est disposé sur la surface principale du substrat (12) sur l'axe (34) d'émission du composant (30) laser et en sens opposé à la direction (32) d'émission.

5. Tête d'analyse optique suivant la revendication 4,
**caractérisée en ce**
**qu'**il est interposé entre le composant (30) laser et le détecteur (22) de signal de sens opposé un élément (38) d'appui par lequel l'élément (40) optique est relié au substrat (12).

6. Tête d'analyse optique suivant la revendication 5,
**caractérisée en ce que**
l'élément (38) d'appui disposé entre le composant (30) laser et le détecteur (22) de signal de sens opposé est muni, sur sa surface tournée vers le composant laser, d'une couche (44) de miroir métallique ou diélectrique.

7. Tête d'analyse optique suivant la revendication 5,
**caractérisée en ce que**
l'élément (38A) d'appui disposé entre le composant (30) laser et le détecteur (22) de signal de sens opposé est muni, sur sa surface tournée vers le composant laser, d'une couche (44A) d'absorption.

8. Tête d'analyse optique suivant l'une des revendications 5 à 7,
**caractérisée en ce que**
l'élément d'appui disposé entre le composant (30) laser et le détecteur (22) de signal opposé est constitué en dispositif (38B, 38C) de déviation, qui détourne la lumière diffusée du composant (30) laser du détecteur (22) de signal de sens opposé.

9. Tête d'analyse optique suivant la revendication 8,
**caractérisée en ce que**
l'élément d'appui constitué en dispositif (38B, 38C) de déviation dévie de la lumière diffusée dans une direction pour l'essentiel perpendiculaire à la surface principale.

10. Tête d'analyse optique suivant l'une des revendications précédentes,
**caractérisée en ce que**
le au moins un détecteur (20, 22 ; 62) de signal est formé dans le substrat (12).

11. Tête d'analyse optique suivant la revendication 10,
**caractérisée en ce que**
le au moins un détecteur (20, 22 ; 62) de signal comprend un réseau (90 ; 92 ; 94 ; 96) de photodiodes PIN formées dans le substrat (12).

12. Tête d'analyse optique suivant l'une des revendications précédentes,
**caractérisée en ce**
**qu'**un détecteur (18 ; 52; 64) de moniteur est intégré sur le substrat (12) pour le contrôle de la puissance émise par le composant (30) laser.

13. Tête d'analyse optique suivant l'une des revendications précédentes,
**caractérisée en ce que**
les éléments (38D, 38E) d'appui sont disposés latéralement au miroir (36) de déviation, les détecteurs (20, 22) sont montés entre le miroir (36) et les éléments (38D, 38E) d'appui et l'élément (40) optique est fixé sur les éléments (38D, 38E) d'appui.

14. Tête d'analyse optique suivant l'une des revendications précédentes,
**caractérisée en ce que**
le substrat (12) est formé d'un substrat en silicium.

15. Tête d'analyse optique suivant l'une des revendications précédentes,
**caractérisée en ce que**
la surface principale du substrat (12) a une superficie inférieure ou égale à 10 mm².

16. Procédé de production d'une tête d'analyse optique suivant l'une des revendication 1 à 15, dans lequel, pour la production du dispositif de déviation
- on scie une plaquette de verre en bandes individuelles,
- on taille sur les bandes des surfaces sous un angle déterminé à l'avance, notamment sous un angle d'environ 45°,
- on recouvre les surfaces taillées d'une couche de miroir très réfléchissante pour obtenir un prisme de déviation du faisceau laser, et
- on oriente les prismes de déviation et on les relie de manière fixe avec le substrat,
**caractérisé en ce que** l'on relie les prismes de déviation au substrat par des liaisons anodiques.

17. Procédé suivant la revendication 16,
**caractérisé en ce que**
avant de scier la plaquette de verre, on métallise des parties sur la face avant de la plaquette de verre pour ménager des surfaces de métallisation pour la fixation de composants optiques après la liaison des prismes des déviations avec le substrat.

18. Procédé suivant la revendication 16 ou 17,
**caractérisé en ce que**
avant de scier la plaquette de verre on ménage par sablage des sillons dans la face arrière de la plaquette de verre.

19. Procédé suivant l'une des revendications 16 à 18,
**caractérisé en ce que**
l'on produit les éléments d'appui en même temps que le dispositif de déviation de la plaquette de verre.

20. Procédé suivant l'une des revendications 16 à 19,
**caractérisé en ce que**
l'on forme comme détecteur(s) de signal un réseau de photodiodes PIN dans le substrat.
